Europäisches Patentamt

**European Patent Office**

**Office européen des brevets**

(19)

(11) Veröffentlichungsnummer: **0 016 469**
**B1**

(12)

# EUROPÄISCHE PATENTSCHRIFT

(45) Veröffentlichungstag der Patentschrift:
**12.01.83**

(21) Anmeldenummer: **80101500.9**

(22) Anmeldetag: **21.03.80**

(51) Int. Cl.³: **B 62 D 27/00,** B 62 D 33/06,
B 60 G 25/00, F 16 F 1/38

(54) **Vorrichtung zum elastischen Abstützen eines verwindungssteifen Aufbaues auf einem verwindungsweichen Fahrgestellrahmen von Kraftfahrzeugen.**

(30) Priorität: **24.03.79 DE 2911722**

(43) Veröffentlichungstag der Anmeldung:
**01.10.80 Patentblatt 80/20**

(45) Bekanntmachung des Hinweises auf die Patenterteilung:
**12.01.83 Patentblatt 83/2**

(84) Benannte Vertragsstaaten:
**DE FR GB IT SE**

(56) Entgegenhaltungen:

**DE-A-1 290 830**
**DE-A-1 917 937**
**DE-A-2 345 890**
**FR-A-663 652**
**FR-A-1 038 576**
**FR-A-1 234 092**
**FR-A-1 350 313**
**FR-A-2 094 359**
**FR-A-2 305 644**
**GB-A-677 938**

(73) Patentinhaber: **Magirus - Deutz Aktiengesellschaft,
Schillerstrasse 2, D-7900 Ulm / Donau (DE)**

(72) Erfinder: **Alweswerth, Reinhard, Dr. Ing.,
Kernerstrasse 30, D-7900 Ulm/Donau (DE)**
Erfinder: **Eckert, Siegbert, Ing. Grad, Goerdelerweg 12,
D-7900 Ulm/Donau (DE)**
Erfinder: **Loop, Heiner, Dipl.-Ing., Neue Welt 16,
D-7917 Vöhringen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Vorrichtung zum elastischen Abstützen eines verwindungssteifen Aufbaues auf einem
verwindungsweichen Fahrgestellrahmen von Kraftfahrzeugen

Die Erfindung bezieht sich auf eine Vorrichtung zum elastischen Abstützen eines verwindungssteifen Aufbaues, wie z.B. einer Pritsche, auf einem verwindungsweichen Fahrgestellrahmen von Kraftfahrzeugen durch zwei quer und symmetrisch zur Längsmittelachse angeordnete nachgiebige Lagerstellenpaare und einer an einem Ende des Aufbaues in der Längsmittelachse befindlichen allseits nachgiebigen Lagerstelle.

Bei einer bekannten elastischen Abstützung dieser Art (DE-A-14 05 339) ist der steife Aufbau am hinteren Ende und in der Mitte über je ein Lagerstellenpaar unmittelbar an den Längsträgern des Fahrzeugrahmens und mit seinem vorderen unmittelbar hinter dem Fahrerhaus liegenden Ende über ein in der Fahrzeuglängsmittelachse liegendes Gummigelenklager auf einem Querträger des Rahmens abgestützt.

Von Nachteil ist, dass das Wankmoment vom steifen Aufbau nur in den hinteren Rahmenteil eingeleitet werden kann, wodurch sich das Fahrzeugheck seitlich stärker neigen kann als der vordere Fahrzeugteil mit dem Fahrerhaus. Hierdurch ist der Fahrer nicht in der Lage, die wahre Schräglage des Fahrzeuges richtig abzuschätzen, so dass die Gefahr des seitlichen Umkippens gross ist. Desweiteren ist darauf hinzuweisen, dass bei dieser Art der Abstützung die Verwindungsfähigkeit des Rahmens eingeschränkt wird, was zu grösseren Radlaständerungen beim Überfahren von Hindernissen führt.

Aus der DE-A-27 26 448 ist eine weitere elastische Abstützung bekannt, bei der der steife Aufbau am vorderen und hinteren Ende über in der Fahrzeuglängsmittelachse angeordnete Drehlager und auf etwa halber Länge des Aufbaues über Gelenkstützen direkt auf den Längsträgern des Fahrzeugrahmens abgestützt ist.

Diese Abstützung hat ebenfalls den Nachteil, dass bei grösseren Rahmenverwindungen, wie sie z.B. beim langsamen Überfahren von grösseren Hindernissen auftreten, das Wankmoment des Aufbaues ebenfalls nur in den hinteren Rahmenteil eingeleitet wird, so dass auch bei dieser Lagerung die Gefahr des Umkippens sehr gross ist. Ausserdem hat diese Abstützung den Nachteil, dass vom Rahmen ausgehende Torsionsschwingungen praktisch ungedämpft bleiben, was nur niedrige Fahrtgeschwindigkeiten des Fahrzeuges im Gelände erlaubt. Schliesslich ist noch auf den Nachteil hinzuweisen, dass diese Abstützung nur 4 Lagerpunkte zur Weiterleitung von Kräften hat, die daher besonders dimensioniert werden müssen, und durch die ausserdem eine grössere partielle Beanspruchung des steifen Aufbaues als auch des Fahrzeugrahmens hervorgerufen wird.

Der Erfindung liegt daher die Aufgabe zugrunde, die bekannten elastischen Abstützungen so zu verbessern, dass deren Nachteile vermieden werden.

Die Aufgabe ist erfindungsgemäss dadurch gelöst, dass ein Lagerstellenpaar am vorderen Ende der Pritsche mit in Druckrichtung harter und in Zugrichtung weicher Federung und grossen Ausgleichswegen, das andere Lagerstellenpaar im Bereich der Hinterachse und die einzelne Lagerstelle am hinteren Ende des Rahmens angeordnet ist, dass am Lagerstellenpaar im Bereich der Hinterachse der Rahmen gegenüber der Pritsche innerhalb einer horizontalen Ebene frei bewegbar gehalten ist und dass die Längs- und Querkräfte nur von den vorderen und hinteren Lagerstellen und die Vertikalkräfte von allen Lagerstellen übertragen werden können.

Die erfindungsgemässe Lagerung hat den Vorteil, dass das Kippmoment der Nutzlast wesentlich besser auf die Vorder- und Hinterachse abgestützt werden kann, wodurch sich eine verbesserte Kippstabilität bei Kurven und Geländefahrten ergibt. Durch die Weiterleitung der Verwindung auf den vorderen Rahmenteil ist es weiterhin vorteilhaft, dass der Fahrer die wirkliche Schräglage des Fahrzeuges besser abschätzen kann, so dass die Gefahr des Umkippens früher erkannt und somit verhindert werden kann. Vorteilhaft ist es ausserdem, das durch die Lagerung des Aufbaues in fünf Punkten die Beanspruchung des Fahrzeugrahmens gegenüber einer Drei- oder Vierpunktlagerung wesentlich vermindert wird. Darüber hinaus besitzt die erfindungsgemässe Lagerung gegenüber einer Drei- oder Vierpunktlagerung den Vorteil, dass bei schneller Fahrt über kleinere Hindernisse die Verbindung des Aufbaues in fünf Punkten sich auf dem Rahmen als torsionsversteifend auswirkt, wodurch im Gelände höhere Fahrgeschwindigkeiten erzielt werden können. Schliesslich hat die erfindungsgemässe Lagerung auch beim langsamen Überfahren von hohen Hindernissen den Vorteil, dass sich der Rahmen weitgehend frei verdrillen kann, ohne dass grössere Radlaständerungen hervorgerufen werden.

In weiterer Ausgestaltung der Erfindung ist vorgesehen, dass das im Bereich der Hinterachse liegende Lagerstellenpaar und die hintere Lagerstelle als an sich bekannte Gummigelenklager ausgebildet sind.

Um zu verhindern, dass die Bewegungen des Fahrzeugrahmens im Bereich des mittleren Lagerstellenpaares eingeschränkt werden, bestehen die einzelnen Lagerstellen aus je zumindest einem Lenker, dessen pritschen-und rahmenseitige Enden jeweils in Gummigelenklager gefasst sind. Die Verwendung von Lenkern in der mittleren Lagerstelle zwischen Pritsche und Fahrzeugrahmen hat den Vorteil, dass der Rahmen sich an dieser Stelle innerhalb der horizontalen Ebene frei bewegen kann.

Für eine bessere Einleitung des Kippmomentes ist es zweckmässig, wenn das vordere Lagerstellenpaar eine breite Stützbasis hat, die grösser ist als die Stützbasis des mittleren Lagerstellenpaares.

Zweckmässig bestehen die einzelnen Lagerstellen des vorderen Lagerstellenpaares aus einem konischen Gummimetallelement, das am Fahrgestellrahmen befestigt ist und auf dessen äusserer Metallschale ein am Pritschenboden befestigter glockenartiger Lagerdeckel aufliegt. Dabei wird eine gute Zentrierung der Pritsche an den einzelnen Lagerstellen dadurch erzielt, dass der Lagerdeckel und die Metallschale den gleichen Konuswinkel haben. Zusätzlich können am vorderen Lagerstellenpaar Stossdämpfer zur weiteren Dämpfung angeordnet werden. Bei den vorderen Lagern erfolgt die Verbindung zwischen dem pritschenseitigen Teil der Lager und dem fahrgestellrahmenseitigen Teil über einen zentrisch angeordneten Schraubenbolzen, der über eine Feder an der inneren Metallschale anliegt. Die Ausbildung der Feder bestimmt dabei im wesentlichen die einzelnen Ausgleichswege an den vorderen Lagerstellen.

Schliesslich wird noch im Rahmen der Erfindung vorgeschlagen, dass die Pritsche durch Einstellung der Federn am vorderen Lagerstellenpaar oder durch Abstimmung der Länge der Lenker des mittleren Lagerstellenpaares gegenüber dem Fahrzeugrahmen verspannt ist. Hierdurch lässt sich bei Leerfahrt des Fahrzeuges ein Klappern der Pritsche an den Lagerstellen verhindern.

In der Zeichnung ist ein Ausführungsbeispiel der Erfindung dargestellt.

Es zeigen:

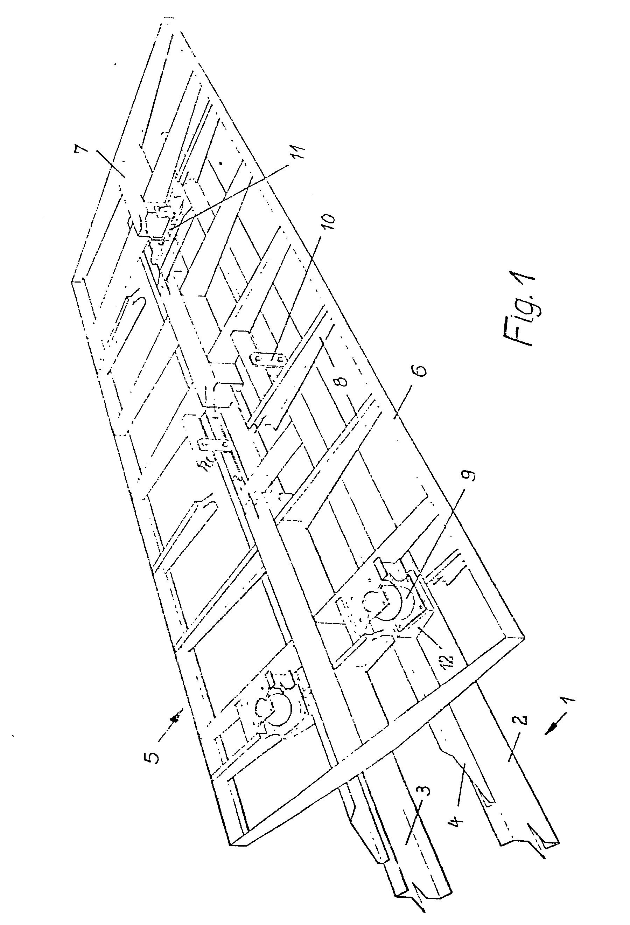

Fig. 1 in perspektivischer Darstellung die erfindungsgemässe Pritschenlagerung.

Fig. 2 im Längsschnitt eine Lagerstelle des vorderen Lagerpaares.

Fig. 3 im Längsschnitt eine Lagerstelle des mittleren Lagerstellenpaares.

Fig. 4 im Längsschnitt die hintere Lagerstelle.

Ein nicht näher dargestellter Lastwagen hat einen Fahrgestellrahmen 1 mit den beiden Längsträgern 2 und 3. Die Längsträger 2 und 3 sind durch Querträger so miteinander verbunden, dass sich ein verwindungsweicher Rahmen ergibt. Auf die Oberseite der Längsträger ist ein Hilfsrahmen 4 aufgesetzt und über bekannte Befestigungsmittel mit diesen verbunden. Am Hilfsrahmen 4 ist eine Pritsche — von der nur der Pritschenboden 5 gezeigt ist — über die erfindungsgemässe Lagerung elastisch abgestützt. Der Pritschenboden bildet eine verwindungssteife Konstruktion, die im wesentlichen aus einem den Boden 5 aussen einfassenden Rahmen 6, einem parallel zur Fahrzeuglängsachse verlaufenden Zentralrohr 7 und mehreren den Rahmen 6 mit dem Zentralrohr 7 verbindenden Traversen 8 besteht.

Gemäss der Erfindung ist die verwindungssteife Pritsche mit ihrem in Fahrtrichtung vorn liegenden Ende über ein erstes Lagerstellenpaar 9, im Bereich der Hinterachse über ein zweites Lagerstellenpaar 10 und am hinteren Ende über eine in der Fahrzeuglängsmittelebene liegende einzelne Lagerstelle 11 am Hilfsrahmen 4 abgestützt. Bei dieser 5-Punktlagerung sind die Lagerstellen 9 - 11 konstruktiv so gestaltet, dass bei nicht verwundenem Fahrgestellrahmen 1 die Vertikalkräfte von sämtlichen Lagerstellen und die horizontalen Führungskräfte vom vorderen Lagerstellenpaar 9 und der hinteren Lagerstelle 11 aufgenommen werden.

Dagegen werden bei verwundenem Fahrgestellrahmen die Vertikalkräfte von der jeweils auf Druck beanspruchten Lagerstelle des vorderen Lagerstellenpaares 9, dem zweiten Lagerstellenpaar 10 und der hinteren Lagerstelle 11 und die horizontalen Führungskräfte von der auf Druck beanspruchten vorderen Lagerstelle und der hinteren Lagerstelle 11 aufgenommen. Um hierbei grössere Verspannungen der Pritsche zu vermeiden, kann die auf Zug beanspruchte vordere Lagerstelle der einwirkenden Zugkraft nachgeben und das zweite Lagerstellenpaar 10 die zwischen Rahmen 1 und Pritsche in der horizontalen Ebene auftretenden Bewegungen ausgleichen.

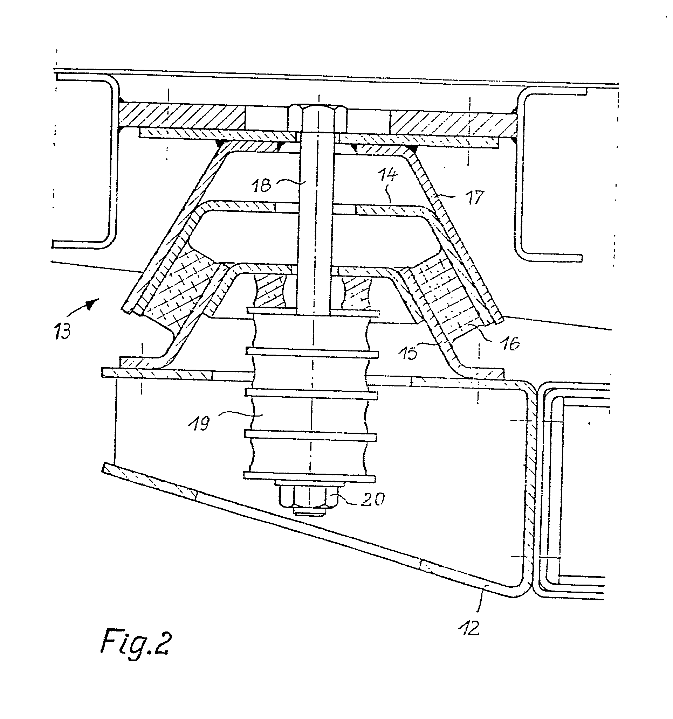

Das vordere Lagerstellenpaar 9 ist aussen am Hilfsrahmen 4 auf besonderen Konsolen 12 abgestützt, wodurch die gewünschte grosse Stützspur zur Einleitung der Kippmomente aus der Pritschenlast erreicht wird. Gemäss Fig. 2 besteht jede einzelne Lagerstelle des vorderen Lagerstellenpaares aus einem konischen Gummimetallelement 13, das sich aus einer äusseren konischen Metallschale 14, einem inneren konischen Sockel 15 und dem dazwischen an beiden Teilen anvulkanisierten Gummielement 16 mit harter Federung zusammensetzt. Das Gummimetallelement 13 ist dabei über den Sockel 15 an der Konsole 12 befestigt. Am Pritschenboden 5 sind zwei glockenartige Lagerdeckel 17 befestigt, die auf den äusseren Metallschalen der Gummimetallelemente 13 aufliegen, wobei wegen einer exakten Führung der Pritsche in der horizontalen Fahrzeugebene der Lagerdeckel 17 und die Metallschale 14 den gleichen Konuswinkel haben.

Die Verbindung des Lagerdeckels 17 bzw. der Pritsche mit dem Gummimetallelement 13 erfolgt über einen Schraubbolzen 18, der mittig durch Öffnungen der Teile 14 bis 17 gesteckt ist und auf dessen nach unten vorstehender Länge eine Gummiringfeder 19 geschoben ist, die mittels einer Mutter 20 gegen die Unterseite des Metallsockels 15 mit geringer Vorspannung gepresst ist. Anstelle der Gummiringfedern können auch andere Federarten wie z.B. Tellerfedern eingebaut werden.

Die Gummiringfeder 19 hat eine weiche Federkennlinie mit langen Federwegen, wodurch bei Rahmenverwindungen an der auf Zug beanspruchten Lagerstelle der Lagerdeckel 17 von der Lagerschale 14 abheben kann, so dass Verzwängungen des Pritschenbodens weitgehend vermieden werden.

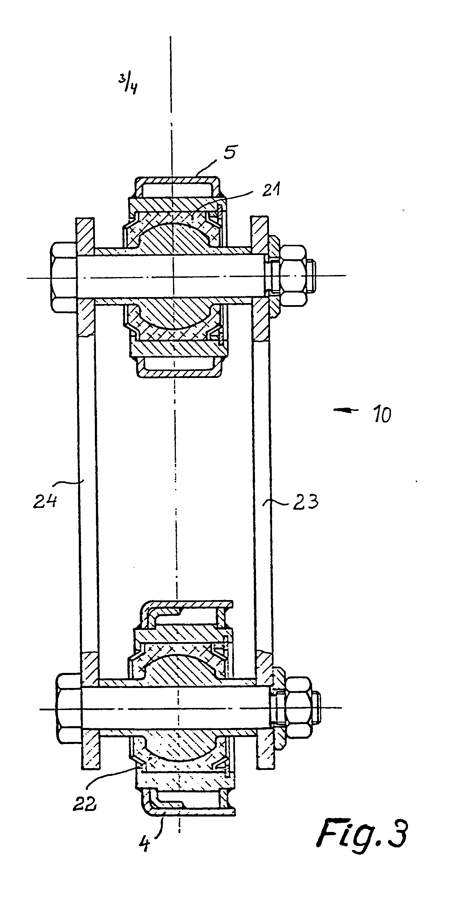

Die einzelne Lagerstelle des mittleren Lagerstellenpaares 10 besteht gemäss Fig. 3 aus einem am Pritschenboden 5 und einem am Hilfsrahmen 4 befestigten Gummigelenklager 21 und 22, die beide durch je eine an der Innen- und Aussenseite des Hilfsrahmens 4 angeordnete Lasche 23 und 24 miteinander verbunden sind. Die Drehachsen der Gelenklager 21 und 22 verlaufen dabei in Fahrzeugquerrichtung.

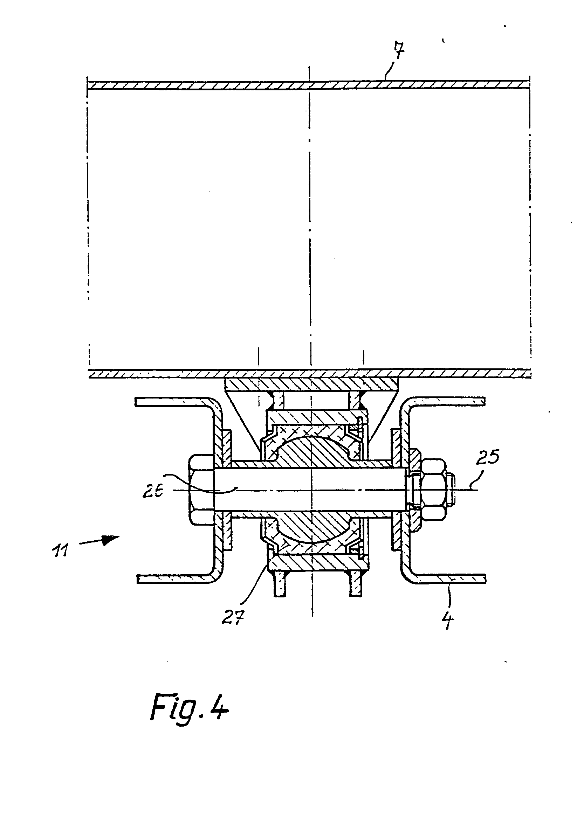

Nach Fig. 4 besteht die hintere Lagerstelle 11 aus einem einzelnen zwischen Pritschenboden 5 und Hilfsrahmen 4 angeordneten Gummigelenklager 27, dessen Drehachse 25 in Fahrzeuglängsrichtung liegt. Dabei ist der innere Teil des Lagers über einen Schraubbolzen 26 am Hilfsrahmen 4 und der äussere Teil am Zentralrohr 7 angeschraubt.

## Patentansprüche

1. Vorrichtung zum elastischen Abstützen eines verwindungssteifen Aufbaues, wie z.B. einer Pritsche, auf einem verwindungsweichen Fahrgestellrahmen (1) von Kraftfahrzeugen durch zwei quer und symmetrisch zur Fahrzeuglängsmittelachse angeordnete nachgiebige Lagerstellenpaare (9 und 10) und einer an einem Ende des Aufbaues in der Längsmittelachse befindlichen allseits nachgiebigen Lagerstelle (11), dadurch gekennzeichnet, dass ein Lagerstellenpaar (9) am vorderen Ende der Pritsche (Pritschenboden 5) mit in Druckrichtung harter und in Zugrichtung weicher Federung und grossen Ausgleichswegen, das andere Lagerstellenpaar (10) im Bereich der Hinterachse und die einzelne Lagerstelle (11) am hinteren Ende des Rahmens (1) angeordnet ist, dass am Lagerstellenpaar (10) der Rahmen (1) gegenüber der Pritsche innerhalb einer horizontalen Ebene frei bewegbar gehalten ist und dass die Längs- und Querkräfte nur von den vorderen und hinteren Lagerstellen (9 und 11) und die Vertikalkräfte von allen Lagerstellen (9 bis 11) übertragbar sind.

2. Vorrichtung nach Anspruch 1, dadurch gekennzeichnet, dass das im Bereich der Hinterachse liegende Lagerstellenpaar (10) und die hintere Lagerstelle (11) aus an sich bekannten Gummigelenklagern bestehen.

3. Vorrichtung nach Anspruch 1 oder 2, dadurch gekennzeichnet, dass jede einzelne Lagerstelle des mittleren Lagerstellenpaares (10) zur Verbindung der Pritsche (5) mit dem Fahrgestellrahmen (1) zwei Laschen (23 und 24) aufweist, deren pritschen- und rahmenseitige Enden jeweils in Gummigelenklager (21 und 22) gefasst sind.

4. Vorrichtung nach einem der Ansprüche 1 bis 3, dadurch gekennzeichnet, dass das vordere Lagerstellenpaar (9) eine breitere Stützbasis hat, als das mittlere Lagerstellenpaar (10).

5. Vorrichtung nach einem der Ansprüche 1 bis 4, dadurch gekennzeichnet, dass jede einzelne Lagerstelle des vorderen Lagerstellenpaares aus einem konischen Gummimetallelement (13) besteht, das am Fahrgestellrahmen (1) befestigt ist, auf dessen äusserer Metallschale (14) ein am Pritschenboden befestigter glockenartiger Lagerdeckel (17) aufliegt.

6. Vorrichtung nach einem der Ansprüche 1 bis 5, dadurch gekennzeichnet, dass der Lagerdeckel (17) und die Metallschale (14) den gleichen Konuswinkel haben.

7. Vorrichtung nach einem der Ansprüche 1 bis 6, dadurch gekennzeichnet, dass der Lagerdeckel (17) über einen Schraubbolzen (18) und einer am Metallsockel (15) anliegenden Feder (19) am Gummimetallelement (13) andrückbar ist.

8. Vorrichtung nach einem der Ansprüche 1 bis 7, dadurch gekennzeichnet, dass die Pritsche durch Einstellung der Gummimetallelemente (13) am vorderen Lagerstellenpaar (9) oder Abstimmung der Länge der Laschen (21 und 22) am mittleren Lagerstellenpaar (10) gegenüber dem Fahrzeugrahmen (1) verspannbar ist.

9. Vorrichtung nach einem der Ansprüche 1 bis 8, dadurch gekennzeichnet, dass an den Lagerstellen des vorderen Lagerstellenpaares (9) zwischen Rahmen (1) und Pritschenboden (5) Schwingungsdämpfer angeordnet sind.

## Claims

1. A system for resiliently supporting a torsionally rigid superstructure, for example a platform body, on a torsionally yielding chassis frame (1) of a motor vehicle by means of two pairs (9 and 10) of elastic supports, the supports of each pair being arranged transversely to and symmetrically about the vehicle's longitudinal central axis; and a single universally elastic support (11) disposed in the area of the superstructure's end portion at the longitudinal central axis, characterized in that one pair (9) of the supports, which are hard-sprung in the direction of compressive loads but soft-sprung in the direction of tensile loads and the spring travel of each of which — in the latter direction — is a long one, is arranged at the front end portion of the platform body (bottom 5 of the body), in that the other pair (10) of the supports is arranged in the region of the rear axle and the single support (11) at the rear end portion of the frame (1), in that the frame (1) is held by the other pair (10) of the supports so as to be freely movable in a horizontal plane in relation to the platform body, and in that longitudinal and transverse forces are transmissible only by the front and rear supports (9 and 11) and vertical forces by all the supports (9 to 11).

2. A system according to claim 1, characterized in that the pair (10) of the supports located in the region of the rear axle and the rearmost support (11) comprise rubber ball-and-socket joints as known per se.

3. A system according to claim 1 or claim 2, characterised in that each support of the intermediate pair (10) of the supports is provided, for connecting the platform body (5) to the chassis frame (1), with two side bars (23 and 24) the respective end portions of which adjacent to the platform body and the chassis frame are held in rubber ball-and-socket joints (21 and 22) respectively.

4. A system according to any of the claims 1 to 3, characterized in that the supporting base of the foremost pair (9) of the supports is broader than that of the intermediate pair (10) of the supports.

5. A system according to any of the claims 1 to 4, characterised in that each support of the foremost pair of the supports comprises a conical rubber-metal element (13) which is fastened to the chassis frame (1) and on an outer metal shell (14) on which rests a bell-like cap (17) fastened to the bottom of the platform body.

6. A system according to any of the claims 1 to 5, characterised in that the cone angle of the cap (17) is the same as that of the metal shell (14).

7. A system according to any of the claims 1 to 6, characterised in that the cap (17) is arranged to be pressed against the rubber-metal element (13) by a screw-threaded bolt (18) and a spring (19) abutting on a metal socket (15).

8. A system according to any of the claims 1 to 7, characterised in that the platform body is locatable relative to the chassis frame (1) by adjusting the rubber-metal elements (13) of the foremost pair (9) of the supports or by adjusting the length of the side bars (21 and 22) of the intermediate pair (10) of the supports.

9. A system according to any of the claims 1 to 8, characterized in that a shock absorber is arranged between the chassis frame (1) and the bottom (5) of the body at each support of the foremost pair (9) of the supports.

## Revendications

1. Dispositif pour supporter élastiquement une construction rigide à la torsion telle que par exemple une plate-forme, sur un cadre de châssis (1) peu résistant à la torsion de véhicule automobile, par l'intermédiaire de deux paires de points d'appui souples (9 et 10) disposés transversalement et symétriquement par rapport à l'axe médian longitudinal du véhicule et d'un point d'appui souple en tous sens (11) se trouvant à une extrémité (1) de la construction sur l'axe médian longitudinal, dispositif caractérisé en ce qu'une paire de points d'appui (9) est disposée à l'extrémité antérieure de la plate-forme (plancher 5 de la plate-forme) avec un effet élastique plus dur dans le sens de la compression et plus mou dans le sens de la traction, et avec de grande course de compensation, l'autre paire de points d'appui (10) étant disposée dans la zone de l'essieu arrière et le point d'appui isolé (11) étant disposé à l'extrémité arrière du cadre (1), tandis qu'à la paire de points d'appui (10) le cadre (1) est maintenu de façon à pouvoir se déplacer librement par rapport à la plate-forme à l'intérieur d'un plan horizontal et que les efforts longitudinaux et transversaux ne sont susceptibles d'être retransmis qu'à partir des points d'appui antérieurs et postérieurs (9 et 11), cependant que les efforts verticaux sont susceptibles d'être transmis à partir de tous les points d'appui (9 à 11).

2. Dispositif selon la revendication 1, caractérisé en ce que la paire de points d'appui (10) placée dans la zone de l'essieu arrière et le point d'appui arrière (11) sont constitués par des appuis articulés en caoutchouc connus en soi.

3. Dispositif selon l'une quelconque des revendications 1 et 2, caractérisé en ce que chaque point d'appui individuel de la paire médiane de points d'appui (10) comporte pour la liaison de la plate-forme (5) avec le cadre du châssis (1) deux pattes (23 et 24) dont les extrémités côté plateforme et côté cadre sont respectivement saisies dans des appuis articulés en caoutchouc (21 et 22).

4. Dispositif selon l'une quelconque des revendications 1 à 3, caractérisé en ce que la paire de points d'appui antérieure (9) a une base de support plus large que la paire de points d'appui médiane (10).

5. Dispositif selon l'une quelconque des revendications 1 à 4, caractérisé en ce que chaque point d'appui individuel de la paire de points d'appui antérieure est constitué d'un élément conique métal-caoutchouc (13) fixé au cadre (1) du châssis, sur les coquilles métalliques externes (14) duquel repose un couvercle d'appui (17) en forme de cloche fixé au plancher de la plateforme.

6. Dispositif selon l'une quelconque des revendications 1 à 5, caractérisé en ce que le couvercle d'appui (17) et la coquille métallique (14) ont le même angle de conicité.

7. Dispositif selon l'une quelconque des revendications 1 à 6, caractérisé en ce que le couvercle d'appui (17) est resté susceptible d'être pressé contre l'élément métal-caoutchouc (13) par l'intermédiaire d'un boulon fileté (18) et d'un ressort (19) s'appliquant contre un socle métallique (15).

8. Dispositif selon l'une quelconque des revendications 1 à 7, caractérisé en ce que la plateforme est restée susceptible d'être bridée par rapport au cadre (1) du véhicule par réglage des éléments métal-caoutchouc (13) sur la paire de points d'appui antérieure (9) ou bien par adaptation de la longueur des pattes (21 et 22) sur la paire de points d'appui médiane (10).

9. Dispositif selon l'une quelconque des revendications 1 à 8, caractérisé en ce que sur les points d'appui de la paire de points d'appui antérieure (9), entre le cadre (1) et le plancher (5) de la plate-forme, sont disposés des amortisseurs d'oscillation.

Fig. 1

0 016 469

Fig.2

Fig.3

Fig. 4